# EUROPEAN PATENT APPLICATION

(11) **EP 4 579 624 A1**
(43) Date of publication of application: **02.07.2025**
(21) Application number: 23856908.1
(22) Date of filing: 15.05.2023
(51) Int. Cl.: G07G 1/12, G07G 1/00

(54) **SETTLEMENT DEVICE, PROGRAM, AND COMPUTER-READABLE STORAGE MEDIUM**

(30) Priority: 26.08.2022 JP 2022135024
(71) Applicant: Toshiba TEC Kabushiki Kaisha, Tokyo 141-8562 (JP)
(72) Inventor: SUGIYAMA, Hideaki, Izunokuni-shi, Shizuoka 410-2392 (JP)
(74) Representative: Bandpay & Greuter
(86) International application number: PCT/JP2023/018066
(87) International publication number: WO 2024/042789

(57) **Abstract**

In one embodiment, a settlement apparatus includes an acquisition unit, a display control unit, a correction acceptance unit, a first settlement unit, and a second settlement unit. The acquisition unit acquires, from an external system, information of a commodity that a settler obtains in a commodity sales area. The display control unit causes a display device to display the information of the commodity acquired by the acquisition unit. The correction acceptance unit accepts a correction instruction relating to the information of the commodity. The first settlement unit performs settlement, based on the information of the commodity acquired by the acquisition unit, in a case where the correction instruction is not accepted. The second settlement unit discards the information of the commodity acquired by the acquisition unit and performs settlement, based on information of the commodity acquired via an input device, in a case where the correction instruction is accepted.

## Description

### FIELD

Embodiments described herein relate generally to a settlement apparatus, a program, and a computer-readable storage medium.

### BACKGROUND

In recent years, an unmanned store system has been developed and already put into practical use as a kiosk in a station or the like. The unmanned store system recognizes in real time a commodity obtained by a customer in a commodity sales area by correlating the commodity with the customer, and when the customer enters a settlement area, the unmanned store system causes a display device of a settlement apparatus to display information of the commodity correlated with the customer, thus performing settlement. In such an unmanned store system, there is a demand for a settlement apparatus that enables a customer to smoothly perform settlement by an operation by himself/herself, even if there is a problem in the system.

### CITATION LIST

### PATENT LITERATURE

Patent document 1: Jpn. Pat. Appln. KOKAI Publication No. 2021-108208

### SUMMARY

### TECHNICAL PROBLEM

An object of the present invention is to provide a settlement apparatus that enables a customer to smoothly perform settlement by an operation by himself/herself, even if there is a problem in an unmanned store system.

### BRIEF DESCRIPTION OF THE DRAWINGS

FIG. 1 is a schematic diagram illustrating a schematic configuration of a store 1 in which an unmanned store system is constructed.
FIG. 2 is a schematic diagram illustrating main data stored in a transaction file.
FIG. 3 is a block diagram illustrating a circuit configuration of a main part of a settlement terminal.
FIG. 4 is a flowchart illustrating a procedure of a main part of information processing that a processor of the settlement terminal executes.
FIG. 5 is a flowchart illustrating a procedure of a main part of information processing that the processor of the settlement terminal executes.
FIG. 6 is a flowchart illustrating a procedure of a main part of information processing that the processor of the settlement terminal executes.
FIG. 7 is a flowchart illustrating a procedure of a main part of information processing that the processor of the settlement terminal executes.
FIG. 8 is a schematic diagram illustrating an example of an image displayed on an initial screen.
FIG. 9 is a schematic diagram illustrating an example of an image displayed on a membership confirmation screen.
FIG. 10 is a schematic diagram illustrating an example of an image displayed on a shopping bag selection screen.
FIG. 11 is a schematic diagram illustrating an example of an image displayed on a detail screen.
FIG. 12 is a schematic diagram illustrating an example of an image displayed on a payment selection screen.
FIG. 13 is a schematic diagram illustrating an example of an image displayed on a settlement end screen.
FIG. 14 is a schematic diagram illustrating an example of an image displayed on a payment cancellation screen.
FIG. 15 is a schematic diagram illustrating an example of an image displayed on a confirmation screen.
FIG. 16 is a schematic diagram illustrating an example of an image displayed on a calling-in-progress screen.

### DETAILED DESCRIPTION

In one embodiment, a settlement apparatus includes an acquisition unit, a display control unit, a correction acceptance unit, a first settlement unit, and a second settlement unit. The acquisition unit acquires, from an external system, information of a commodity that a settler obtains in a commodity sales area. The display control unit causes a display device to display the information of the commodity acquired by the acquisition unit. The correction acceptance unit accepts a correction instruction relating to the information of the commodity. The first settlement unit performs settlement, based on the information of the commodity acquired by the acquisition unit, in a case where the correction instruction is not accepted. The second settlement unit discards the information of the commodity acquired by the acquisition unit and performs settlement, based on information of the commodity acquired via an input device, in a case where the correction instruction is accepted.

Hereinafter, an embodiment of a settlement apparatus, which enables a customer to smoothly perform settlement by an operation by himself/herself even if there is a problem in an unmanned store system, is described with reference to the drawings.

### [Description of Configuration of Unmanned Store System]

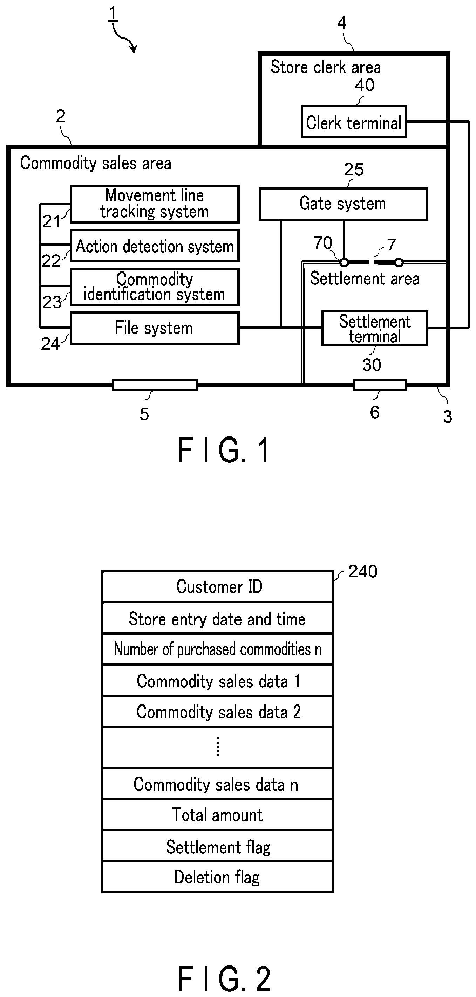

FIG. 1 is a schematic diagram illustrating a schematic configuration of a store 1 in which an unmanned store system is constructed. The store 1 includes a commodity sales area 2, a settlement area 3, and a store clerk area 4. The commodity sales area 2 is an area in which commodity shelves, on which commodities of a plurality of items are displayed on an item-by-item basis, are installed. The settlement area 3 is an area where a customer who has obtained a commodity in the commodity sales area 2 performs settlement. The store clerk area 4 is an area where a store clerk who is a clerk in charge stands by in order to replenish commodities, to cope with a system failure, and the like.

The commodity sales area 2 is provided with an entrance 5 through which a customer can enter and exit. The settlement area 3 is provided with an exit 6 for the customer who has finished the settlement to exit the store. The commodity sales area 2 and the settlement area 3 are partitioned by a partition. An entrance 7 is formed in the partition. The entrance 7 is provided with a gate 70.

A customer who entered the commodity sales area 2 through the entrance 5 picks up a commodity to be purchased from commodities displayed on the commodity shelf. The commodity may be held by hand or may be stored in a bag or the like. The customer who has obtained the commodity enters the settlement area 3 from the entrance 7. The customer becomes a settler by entering the settlement area 3. The customer who becomes the settler settles the commodity by himself/herself. The customer who has finished the settlement goes out of the store 1 through the exit 6.

In the commodity sales area 2 of the store 1, a movement line tracking system 21, an action detection system 22, a commodity identification system 23, a file system 24, and a gate system 25 are provided. In the settlement area 3, a settlement terminal 30 is installed as a settlement apparatus corresponding to a customer's self-operation. A clerk terminal 40 is installed in the store clerk area 4.

The clerk terminal 40 is a terminal that performs a notification operation in response to a call command from the settlement terminal 30. The notification operation is performed by sound, voice, display, or the like. The clerk terminal 40 may be carried by a store clerk. In a case where the store clerk carries the clerk terminal 40, if the store clerk can immediately respond to a call, the store clerk area 4 may be located at a place distant from the commodity sales area 2 and the settlement area 3.

The movement line tracking system 21 is a system that tracks the movement line of a customer who entered the commodity sales area 2 from the entrance 5. The movement line tracking system 21 tracks the movement line of the customer by processing, in time series, frame images captured by many video cameras attached to, for example, the ceiling of the commodity sales area 2.

The action detection system 22 is a system that detects an action of a customer standing in front of a display shelf. The action detection system 22 estimates a skeleton of a person by analyzing a 3D image of a three-dimensional camera that captures an image of a customer standing in front of a store shelf, for example, and detects an action of the customer picking up a commodity from the store shelf, from a motion of a hand obtained by the estimation of the skeleton.

The commodity identification system 23 analyzes a signal of a sensor, such as a weight sensor or an infrared sensor, provided in the commodity shelf, and identifies a commodity taken out from the commodity shelf. The movement line tracking system 21, the action detection system 22, and the commodity identification system 23 are well-known systems utilized in existing unmanned store systems, and thus a detailed description thereof is omitted here.

The file system 24 is a system that manages a transaction file 240 (see FIG. 2) created for each customer who entered the commodity sales area 2. The file system 24 can manage the transaction files 240 of a plurality of customers at the same time.

FIG. 2 is a schematic diagram illustrating main data stored in the transaction file 240. As illustrated in the Figure, the transaction file 240 stores a customer ID, a store entry date and time, the number of purchased commodities n, commodity sales data for the number of commodities n, a total amount, a settlement flag, a deletion flag, and the like.

The customer ID is a unique code set for a customer by the movement line tracking system 21 that recognizes the customer who entered the commodity sales area 2 from the entrance 5. The movement line tracking system 21 tracks the movement line of the customer who can set the customer ID in the commodity sales area 2. The store entry date and time is the date and time when the customer who entered the commodity sales area 2 was recognized by the movement line tracking system 21.

The number of purchased commodities n is the number of commodities estimated to have been obtained from the merchandise shelf by the customer specified by the customer ID. The information as to which commodity the customer has obtained is determined by the action detection system 22 and the commodity identification system 23. The commodity sales data is information of the commodity estimated to have been obtained. The information includes a commodity code, a commodity name, a unit price, the number of sold commodities, a discount amount, a sales amount, and the like. The commodity code, the commodity name, and the unit price are information set in a commodity master file in advance. The number of sold commodities is the number of commodities obtained, which are identified by the commodity codes. The discount amount is an amount of money derived from a discount amount or a discount rate when the discount amount or the discount rate is set for the commodity identified by the commodity code. The sales amount is an amount obtained by subtracting the discount amount from an amount obtained by multiplying the unit price by the number of sold commodities. The total amount is the sum of the sales amounts of the commodity sales data for the number of purchased commodities n. Note that in the present embodiment, it is assumed that the tax imposed on the commodity is a tax included.

The settlement flag is 1-bit data for identifying whether or not the customer specified by the customer ID is a settler. In the present embodiment, the value of the settlement flag is set to "0" when the customer is not the settler, and the value of the settlement flag is set to "1" when the customer is the settler. It is possible to determine whether the customer entered the settlement area 3 from the commodity sales area 2 through the entrance 7, by the movement line tracked by the movement line tracking system 21. If it is determined that the customer entered the settlement area 3, the customer becomes a settler. Then, the settlement flag of the transaction file 240 storing the customer ID is changed from "0" to "1".

The deletion flag is 1-bit data for identifying whether the transaction file 240 is in a deletion state. In the present embodiment, the value of the deletion flag is set to "0" when the deletion state is not set, and the value of the deletion flag is set to "1" when the deletion state is set. The transaction file 240 needs to be stored until the settlement of the customer identified by the customer ID is completed. If the settlement is completed, the transaction file 240 need not be stored. As a result, the deletion flag changes from "0" to "1". Such changes in the values of the settlement flag and the deletion flag are controlled by the file system 24.

The gate system 25 is a system that controls opening and closing of the gate 70 provided in the entrance 7. While the gate 70 is opened by the gate system 25, the customer can enter the settlement area 3 through the entrance 7. However, if the gate 70 is closed, the customer cannot enter the settlement area 3. In addition, the customer in the settlement area 3 cannot return to the commodity sales area 2 through the entrance 7.

### [Configuration of Settlement Terminal]

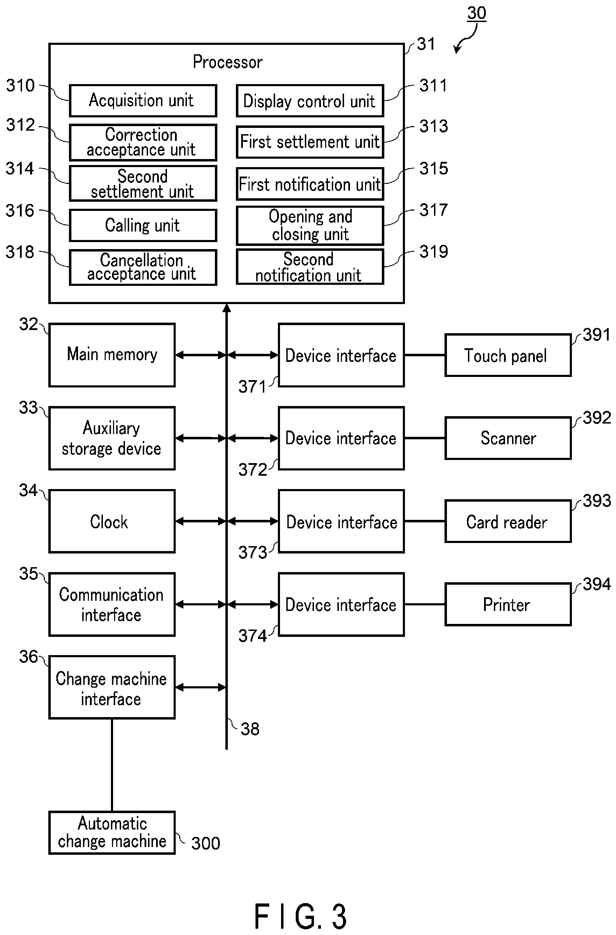

FIG. 3 is a block diagram illustrating a circuit configuration of a main part of the settlement terminal 30. The settlement terminal 30 includes a processor 31, a main memory 32, an auxiliary storage device 33, a clock 34, a communication interface 35, a change machine interface 36, a plurality of device interfaces 371 to 374, and a system transmission path 38. The system transmission path 38 includes an address bus, a data bus, a control signal line, and the like. The settlement terminal 30 constitutes a computer by connecting the processor 31, and the main memory 32, auxiliary storage device 33, clock 34, communication interface 35, change machine interface 36 and device interfaces 371 to 374 via the system transmission path 38. In addition, the settlement terminal 30 connects various devices, such as a touch panel 391, a scanner 392, a card reader 393 and a printer 394, to the device interfaces 371 to 374, respectively.

The processor 31 corresponds to a central portion of the computer. The processor 31 controls each unit to implement various functions as the settlement terminal 30 according to an operating system or an application program. The processor 31 may be a processing circuit such as a central processing unit (CPU), a graphics processing unit (GPU), an application specific integrated circuit (ASIC), or a programmable logic device (for example, a simple programmable logic device (SPLD), a complex programmable logic device (CPLD), or a field programmable gate array (FPGA)). The processor 31 is not limited to a case where the processor 31 is configured as a single processing circuit, and the processor 31 may be configured by combining a plurality of processing circuits. Note that the same applies to other processors according to the present embodiment.

The main memory 32 may be a volatile memory (random access memory) or a nonvolatile memory (read-only memory, nonvolatile random access memory). The main memory 32 stores an information processing program and data necessary for information processing. The processor 31 reads and executes a program stored in the main memory 32, thereby implementing a predetermined function. Note that, instead of storing the program in the main memory 32, the program may be directly incorporated in the processor 31. In this case, the processor 31 implements a predetermined function by reading and executing the program incorporated therein. Further, the predetermined function may be implemented not only by the processor 31 executing the program, but also by a combination of logic circuits. Note that the same applies to other main memories according to the present embodiment.

The auxiliary storage device 33 corresponds to an auxiliary storage portion of the computer. For example, an electric erasable programmable read-only memory (EEPROM), a hard disk drive (HDD), a solid state drive (SSD), or the like may be the auxiliary storage device 33. The auxiliary storage device 33 stores data used by the processor 31 to perform various processes, data created by the process performed by the processor 31, or the like. There is a case where the auxiliary storage device 33 stores the above-described application program.

The clock 34 measures a date and time. The processor 31 processes the date and time measured by the clock 34 as the present date and time.

The communication interface 35 is a circuit for performing data communication with an external computer system via a communication network. The external computer system includes the file system 24 and the gate system 25 described above.

The change machine interface 36 is a circuit for performing data communication with the automatic change machine 300. The automatic change machine 300 has a function of counting the number of bills or coins inserted from an insertion slot for each denomination to obtain the amount of inserted money, and outputting inserted money amount data to the settlement terminal 30, and a function of dispensing bills or coins corresponding to change from a dispensing slot, based on change data received from the settlement terminal 30. Specifically, the change machine interface 36 has a function of receiving the inserted money amount data from the automatic change machine 300, and a function of transmitting the change data to the automatic change machine 300.

The device interface 371 is a circuit for performing data communication with the touch panel 391. The touch panel 391 is a display device capable of displaying display elements such as characters, symbols, and images on a display. In addition, the touch panel 391 is also an input device that detects a touch operation position on the display with a sensor and processes the display element at the position as an input display element.

The device interface 372 is a circuit for performing data communication with the scanner 392. The scanner 392 is an optical input device that reads a machine-readable code such as a bar code or a two-dimensional code by scanning the machine-readable code with light. The scanner 392 may be an imaging-type input device that reads a machine-readable code from an image captured by a camera. The scanner 392 can read not only a machine-readable code attached to a commodity or the like, but also a machine-readable code displayed on a display of a terminal such as a smartphone.

The device interface 373 is a circuit for performing data communication with the card reader 393. The card reader 393 is an input device that reads data from a card medium such as a credit card, an electronic money card, or a membership card, and processes the read card data. The card reader 393 may be a magnetic card reader corresponding to a magnetic card, or an IC card reader corresponding to an IC card. In addition, the magnetic card reader and the IC card reader may be used in combination. The IC card reader may be a non-contact type IC card reader or a contact type IC card reader. Besides, the card reader may be a card reader/writer having a data writing function.

The device interface 374 is a circuit for performing data communication with the printer 394. The printer 394 is a printing device that prints data relating to the settlement of a transaction on a paper medium, and issues a receipt. Note that the receipt may be issued to the customer as an electronic receipt instead of a paper receipt.

In the settlement terminal 30 with the above configuration, the processor 31 has functions as an acquisition unit 310, a display control unit 311, a correction acceptance unit 312, a first settlement unit 313, a second settlement unit 314, a first notification unit 315, a calling unit 316, an opening and closing unit 317, a cancellation acceptance unit 318, and a second notification unit 319, in order to operate as a settlement apparatus that enables a customer to smoothly perform settlement by an operation by himself/herself even if there is a problem in the unmanned store system.

The acquisition unit 310 is a function of acquiring, from an external computer system, information of a commodity obtained by a settler in the commodity sales area 2. The external computer system is, concretely, the file system 24. Specifically, the acquisition unit 310 acquires, from the file system 24, data of the transaction file 240 in which the customer ID for specifying the settler is set.

The display control unit 311 is a function of causing the display device to display the information of the commodity acquired by the acquisition unit 310. The display device is, concretely, the touch panel 391. Specifically, the display control unit 311 causes the touch panel 391 to display information such as the number of purchased commodities, and the total amount, and also the commodity name, the unit price, the number of sold commodities, the discount amount, and the sales amount of one or more pieces of commodity sales data, which are stored in the transaction file 240 acquired by the acquisition unit 310.

The correction acceptance unit 312 is a function of accepting a correction instruction relating to the information of the commodity. The correction instruction is generated by, for example, a touch operation on an arbitrary display element displayed on the touch panel 391. Specifically, if the correction acceptance unit 312 detects a touch operation on an arbitrary display element, the correction acceptance unit 312 accepts the operation as a correction instruction relating to the information of the commodity.

The first settlement unit 313 is a function of performing settlement, based on the information of the commodity acquired by the acquisition unit 310, in a case where the correction instruction is not accepted. The second settlement unit 314 is a function of discarding the information of the commodity acquired by the acquisition unit 310 and performing settlement, based on information of the commodity acquired via the input device, in a case where the correction instruction is accepted. The input device is, concretely, the scanner 392. The input device may be the touch panel 391. The scanner 392 and the touch panel 391 may be used in combination as the input device.

The first notification unit 315 is a function of notifying the external computer system, that is, the file system 24, of the deletion of the information of the commodity acquired by the acquisition unit 310 in response to the end of the settlement by the first settlement unit 313 or the second settlement unit 314. Upon receiving this notification, the file system 24 deletes the corresponding transaction file 240. Specifically, the file system 24 changes the value of the deletion flag of the corresponding transaction file 240 from "0" to "1".

The calling unit 316 is a function of outputting a signal for calling a clerk if the acquisition unit 310 fails to acquire the information of the commodity. The output destination of the signal is the clerk terminal 40. Upon receiving the signal, the clerk terminal 40 performs a notification operation for calling the clerk. The notification operation is as described above.

The opening and closing unit 317 is a function of closing the entrance 7 from the commodity sales area 2 to the settlement area 3 if the settler enters the settlement area 3, and opening the entrance 7 in response to the end of settlement by the first settlement unit 313 or the second settlement unit 314. The opening and closing unit 317 is interlocked with the gate system 25. Specifically, if the settler enters the settlement area 3, the opening and closing unit 317 outputs to the gate system 25 a signal for closing the gate 70 provided in the entrance 7. Responding to this signal, the gate system 25 closes the gate 70. Thereafter, if the settlement by the settler is completed, the opening and closing unit 317 outputs a signal for opening the gate 70 to the gate system 25. Upon receiving this signal, the gate system 25 opens the gate 70.

The cancellation acceptance unit 318 is a function of accepting a cancellation instruction of the settlement based on the information of the commodity acquired by the acquisition unit 310. The cancellation instruction is generated by, for example, a touch operation on an arbitrary display element displayed on the touch panel 391. Specifically, upon detecting a touch operation on an arbitrary display element, the cancellation acceptance unit 318 accepts the operation as a cancellation instruction of settlement.

Upon accepting the cancellation instruction, the second notification unit 319 notifies the external computer system, that is, the file system 24, of the deletion of the information of the commodity acquired by the acquisition unit 310. In this case, too, the file system 24 changes the value of the deletion flag of the corresponding transaction file 240 from "0" to "1".

The functions as the acquisition unit 310, display control unit 311, correction acceptance unit 312, first settlement unit 313, second settlement unit 314, first notification unit 315, calling unit 316, opening and closing unit 317, cancellation acceptance unit 318, and second notification unit 319 are implemented by information processing executed by the processor 31 according to the settlement program. The settlement program is installed in the auxiliary storage device 33. The settlement program may be installed in the main memory 32. A method of installing the settlement program in the main memory 32 or the auxiliary storage device 33 is not particularly limited. The settlement program may be installed in the main memory 32 or the auxiliary storage device 33 by recording the settlement program in a removable recording medium or by distributing the settlement program through communication via a network. The recording medium may be in any form as long as the recording medium can store a program and can be read by the apparatus, such as an SD memory card or a USB memory.

### [Description of Operation of Unmanned Store System]

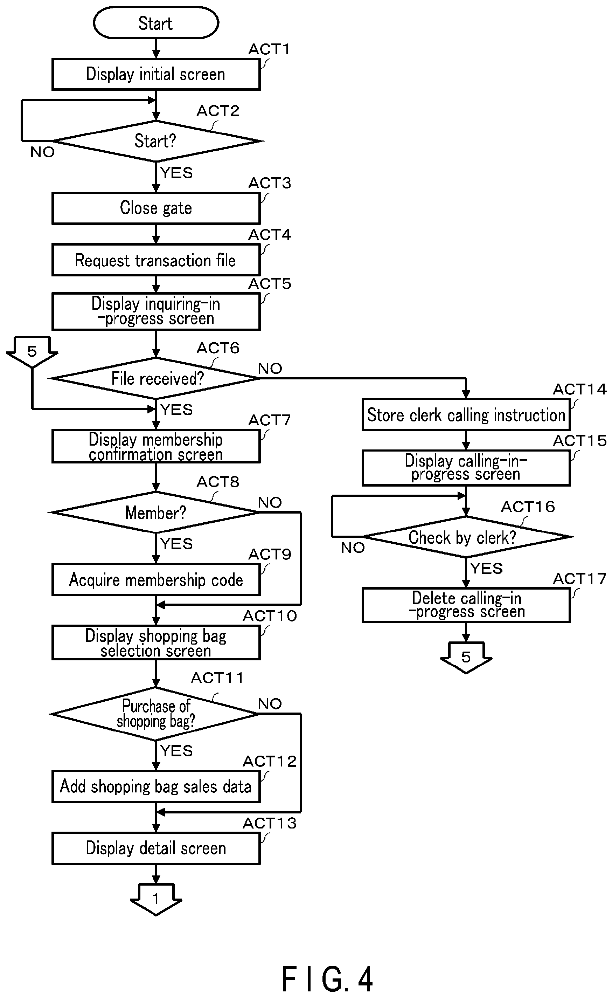

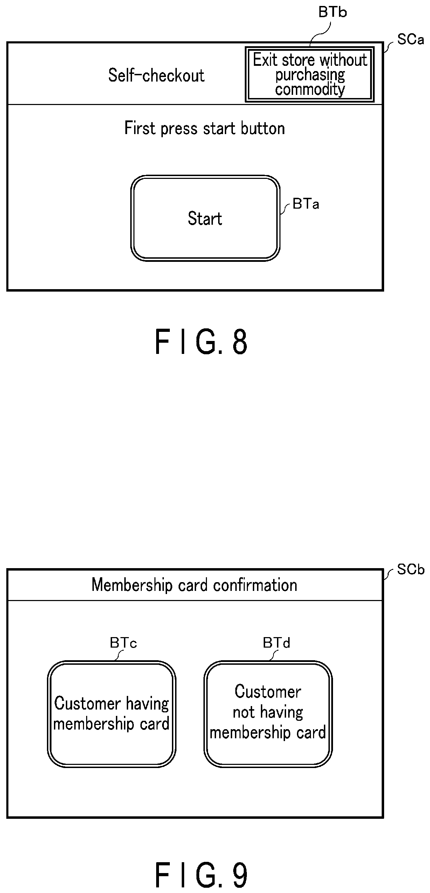

FIGS. 4 to 7 are flowcharts illustrating a procedure of a main part of information processing executed by the processor 31 of the settlement terminal 30 according to the settlement program. FIGS. 8 to 16 are examples of images displayed on the touch panel 391 of the settlement terminal 30 in accordance with the information processing. Hereinafter, main operations of the unmanned store system including the settlement terminal 30 is described with reference to the drawings. Note that the procedure and contents of the information processing described below are merely examples. The procedure and the contents can be appropriately changed if the same operation and effect can be achieved. In addition, the images illustrated in FIGS. 8 to 16 are also examples. The number of display elements, layout, text, and the like can be changed as appropriate.

First, if a customer enters the commodity sales area 2 from the entrance 5, a unique customer ID is set for the customer by the operation of the movement line tracking system 21. Then, the transaction file 240 including the customer ID is formed by the operation of the file system 24. At this time, the values of the settlement flag and the deletion flag stored in the transaction file 240 are both "0".

If the customer moves in the commodity sales area 2, the movement line of the customer is tracked by the operation of the movement line tracking system 21. Then, if the customer obtains a commodity to be purchased from the commodity shelf, the commodity is specified by the operation of the action detection system 22 and the commodity identification system 23, and the commodity sales data is stored in the transaction file 240 including the customer ID of the customer. In addition, the number of purchased commodities n in the transaction file 240 is incremented by one, and the total amount is calculated.

The customer who has finished obtaining the commodity to be purchased enters the settlement area 3 from the entrance 7 through the opened gate 70. Note that if the gate 70 is closed, the customer enters the settlement area 3 after waiting for the gate 70 to be opened. If the movement line tracking system 21 detects that the customer has entered the settlement area 3 from the entrance 7, the value of the settlement flag of the transaction file 240 in which the customer ID of the customer is stored is changed from "0" to "1". Thus, the customer who entered the settlement area 3 becomes a settler. The customer who entered the settlement area 3 operates the settlement terminal 30 by himself/herself to settle the obtained commodity.

The processor 31 of the settlement apparatus 30 displays, as ACT1, an image of an initial screen SCa (see FIG. 8) on the touch panel 391, as illustrated in FIG. 4. Then, the processor 31 waits for a start operation as ACT2.

FIG. 8 is a schematic diagram illustrating an example of an image displayed on the initial screen SCa. As illustrated in the Figure, the initial screen SCa includes images of a first button BTa displaying a text "Start" and a second button BTb displaying a text "Exit store without purchasing commodity". The first button BTa and the second button BTb are software keys that are input by a touch operation. Note that third to nineteenth buttons BTc to BTu described later are also similar software keys. Specifically, the processor 31 waits for the first button BTa to be input in ACT2.

The customer who has checked the initial screen SCa performs a touch operation on the first button BTa on which the text "Start" is displayed. If the first button BTa is input by a touch operation, the processor 31 accepts a start operation. The processor 31 proceeds from ACT2 to ACT3.

The processor 31 outputs, as ACT3, a signal instructing closing of the gate 70 to the gate system 25 by the function as the opening and closing unit 317. The gate system 25 that has received this signal closes the gate 70. In this way, if the customer who enters the settlement area 3 starts the operation of the settlement terminal 30, the gate 70 is closed. Therefore, it is possible to prevent another customer from entering the settlement area 3.

In addition, the processor 31 outputs, as ACT4, a signal for requesting the transaction file 240 including the commodity sales data of the commodity obtained by the customer to the file system 24 by the function as the acquisition unit 310. The file system 24, which has received this signal, selects the transaction file 240 in which the value of the settlement flag is "1" and the value of the deletion flag is "0", and transfers the transaction file 240 to the settlement terminal 30. In principle, such a transaction file 240 is only the transaction file 240 including the customer ID of the customer who entered the settlement area 3.

The processor 31 that has output the signal to the file system 24 causes the touch panel 391 to display an image of an inquiring-in-progress screen as ACT5. This image is an image including text "Now inquiring about transaction content", for example. The processor 31 confirms whether or not the transaction file 240 is received within a predetermined time as ACT6. Upon receiving the transaction file 240 within the predetermined time, the processor 31 proceeds from ACT6 to ACT7. However, for example, if the transaction file 240 fails to be received within the predetermined time due to a problem in communication between the file system 24 and the settlement terminal 30, the processor 31 proceeds from ACT6 to ACT14. The processing after ACT14 will be described later.

The processor 31 that received the transaction file 240 displays an image of a membership confirmation screen SCb (see FIG. 9) on the touch panel 391 as ACT7.

FIG. 9 is a schematic diagram illustrating an example of an image displayed on the membership confirmation screen SCb. As illustrated in the Figure, the membership confirmation screen SCb includes images of a third button BTc on which a text "Customer having membership card" is displayed and a fourth button BTd on which a text "Customer not having membership card" is displayed. The customer who confirms the membership confirmation screen SCb performs a touch operation on the third button BTc if the customer is a member of the store 1, and performs a touch operation on the fourth button BTd if the customer is a non-member. In addition, the customer who touches the third button BTc, that is, the customer who is a member, performs an operation for inputting a membership code to the settlement terminal 30. For example, a customer who carries a membership card in which a membership code is recorded causes the card reader 393 to read data of the membership card. A customer who installs application software dedicated to members in a smartphone scans a bar code or a two-dimensional code indicating a membership code displayed on the smartphone by the scanner 392.

The processor 31 that displays the image of the membership confirmation screen SCb waits for the third button BTc or the fourth button BTd to be input as ACT8. If the third button BTc is input, the processor 31 proceeds from ACT8 to ACT9. The processor 31 acquires the membership code as ACT9. Specifically, if the data of the membership card is read by the card reader 393, the processor 31 acquires the membership code from the data. If the bar code or the two-dimensional code representing the membership code is scanned by the scanner 392, the processor 31 acquires the membership code from the bar code or the two-dimensional code.

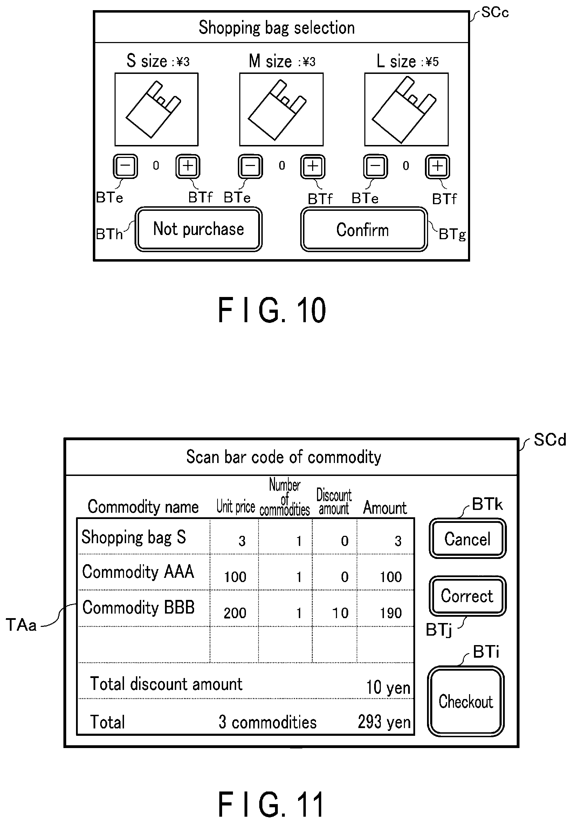

On the other hand, if the fourth button BTd is touched in ACT8, the processor 31 skips the process of ACT9. If the process of ACT9 is executed or skipped, the processor 31 proceeds to ACT10. The processor 31 displays an image of a shopping bag selection screen SCc (see FIG. 10) on the touch panel 391 as ACT10.

FIG. 10 is a schematic diagram illustrating an example of an image displayed on the shopping bag selection screen SCc. As illustrated in the Figure, images of a fifth button BTe on which a symbol "-" is displayed and a sixth button BTf on which a symbol "+" is displayed are arranged in association with each size of shopping bags on the shopping bag selection screen SCc. In addition, images of a seventh button BTg on which a text "Confirm" is displayed and an eighth button BTh on which a text "Not purchase" is displayed are also arranged on the shopping bag selection screen SCc. Note that in FIG. 10, the sizes of shopping bags are set to be three types of "S size", "M size", and "L size", but the sizes may be two types or four or more types. Alternatively, the shopping bag may have only one size. The customer who checks the shopping bag selection screen SCc determines whether or not the shopping bag is necessary. A customer who does not need a shopping bag performs a touch operation on the eighth button BTh. A customer who needs a shopping bag operates the fifth button BTe or the sixth button BTf to set the number of shopping bags to be purchased of a desired size, and then performs a touch operation on the seventh button BTg.

The processor 31 that displays the image of the shopping bag selection screen SCc waits for the seventh button BTg or the eighth button BTh to be input as ACT11. If the seventh button BTg is input, the processor 31 proceeds from ACT11 to ACT12. The processor 31 adds the commodity sales data of the shopping bag to the transaction file 240 as ACT12. For example, if the customer touches the seventh button BTg with the number of purchased "S size" shopping bags being set to "1", the processor 31 adds the commodity code and the commodity name of the "S size" shopping bag, a unit price of 3 yen, the number of sold commodities of 1, a discount amount of 0 yen, and a sales amount of 3 yen to the transaction file 240. In addition, the number of purchased commodities n is increased by one, and the total amount is increased by three yen.

On the other hand, if the eighth button BTh is input by the touch operation in ACT11, the processor 31 skips the process of ACT12. If the process of ACT12 is executed or skipped, the processor 31 proceeds to ACT13. The processor 31 causes, as ACT13, the touch panel 391 to display an image of a detail screen SCd (see FIG. 11), by the function as the display control unit 311.

FIG. 11 is a schematic diagram illustrating an example of an image displayed on the detail screen SCd. As illustrated in the Figure, an image of a purchased commodity list TAa is arranged on the detail screen SCd. In addition, images of a ninth button BTi on which a text "Checkout" is displayed, a tenth button BTj on which a text "Correct" is displayed, and an eleventh button BTk on which a text "Cancel" is displayed are arranged on the detail screen SCd.

The purchased commodity list TAa is created based on the number of purchased commodities n included in the transaction file 240, the commodity sales data for the number of commodities n, and the total amount. Incidentally, the purchased commodity list TAa illustrated in FIG. 10 is a list for a customer who has purchased one shopping bag of the S size with a unit price of 3 yen, one commodity AAA with a unit price of 100 yen, and one commodity BBB with a unit price of 200 yen and a discount amount of 10 yen. The customer who has checked the detail screen SCd determines whether or not the contents of the purchased commodity list TAa are correct. If the contents are correct, the customer touches the ninth button BTi.

However, for example, when a customer obtains a commodity from a commodity shelf, commodity sales data of another commodity may be stored in the transaction file 240 due to a failure of the commodity identification system 23. Further, there may be a case where the commodity sales data of the obtained commodity is not stored in the transaction file 240 due to a failure of the action detection system 22. Besides, when the customer moves from the commodity sales area 2 to the settlement area 3, there may be a case where the settlement flag in the transaction file 240 of another customer may be changed to "1" due to a failure of the movement line tracking system 21. If such a problem occurs in the unmanned store system, the contents of the purchased commodity list TAa displayed on the detail screen SCd are incorrect. In this case, the customer performs a touch operation on the tenth button BTj.

In addition, a customer, who entered the settlement area 3 but cancels the settlement for the reason that, for example, the customer forgets a wallet, touches the eleventh button BTk.

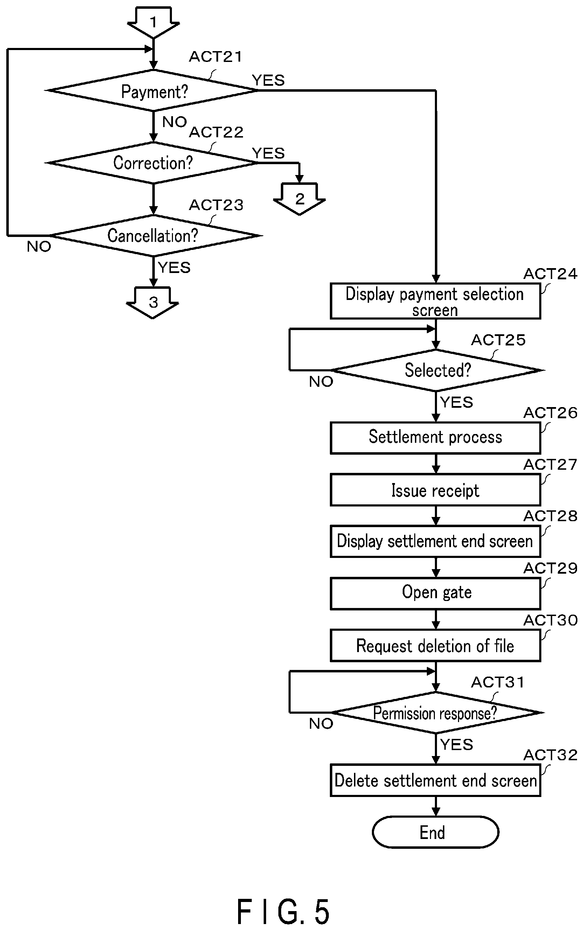

The processor 31 that has displayed the image of the detail screen SCd proceeds to ACT21 in FIG. 5. The processor 31 confirms whether or not the ninth button BTi is input as ACT21. If the ninth button BTi is not input, the processor 31 proceeds to ACT22. The processor 31 confirms whether or not the tenth button BTj is input by the function as the correction acceptance unit 312 as ACT22. If the tenth button BTj is not input, the processor 31 proceeds to ACT23. The processor 31 confirms, as ACT23, whether or not the eleventh button BTk is input by the function as the cancellation acceptance unit 318. If the eleventh button BTk is not input, the processor 31 returns to ACT21. In this way, the processor 31 that displays the image of the detail screen SCd waits for the ninth button BTi, the tenth button BTj, or the eleventh button BTk to be input as ACT21 to ACT23.

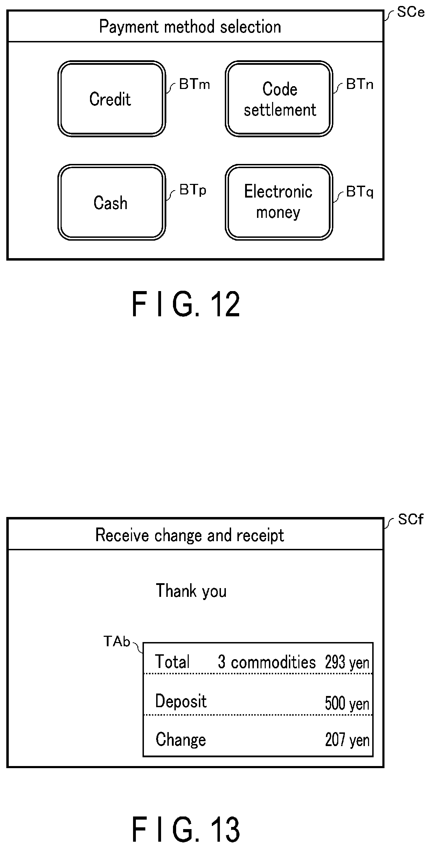

In the standby state from ACT21 to ACT23, if the ninth button BTi on which the text "Checkout" is displayed is input, the processor 31 proceeds from ACT21 to ACT24. The processor 31 causes the touch panel 391 to display an image of a payment selection screen SCe (see FIG. 12) as ACT24.

FIG. 12 is a schematic diagram illustrating an example of an image displayed on the payment selection screen SCe. As illustrated in the Figure, the payment selection screen SCe includes a twelfth button BTm displaying a text "Credit", a thirteenth button BTn displaying a text "Code settlement", a fourteenth button BTp displaying a text "Cash", and a fifteenth button BTq displaying a text "Electronic money". The customer who confirms the payment selection screen SCe performs a touch operation on the twelfth button BTm in a case where the customer pays the price corresponding to the total amount by the credit card. The customer who pays by the code settlement touches the thirteenth button BTn. The customer who pays in cash performs a touch operation on the fourteenth button BTp. The customer who pays by electronic money performs a touch operation on the fifteenth button BTq.

The processor 31, which displays the image of the payment selection screen SCe, waits for any one of the twelfth button BTm, the thirteenth button BTn, the fourteenth button BTp, and the fifteenth button BTq to be input as ACT25. If any one of the twelfth button BTm, the thirteenth button BTn, the fourteenth button BTp, and the fifteenth button BTq is input, the processor 31 proceeds from ACT25 to ACT26. The processor 31 executes, as ACT26, the settlement process according to the selected payment method by the function as the first settlement unit 313.

For example, if the twelfth button BTm is input, that is, if the credit card payment is selected, the processor 31 executes a credit settlement process, based on the data of the credit card read by the card reader 393. For example, if the thirteenth button BTn is input, that is, if the code settlement payment is selected, the processor 31 executes a code settlement process, based on the data of the bar code or the two-dimensional code read by the scanner 392. For example, if the fourteenth button BTp is input, that is, if the cash payment is selected, the processor 31 executes a cash settlement process in interlock with the automatic change machine 300. For example, if the fifteenth button BTq is input, that is, if the electronic money payment is selected, the processor 31 executes an electronic money settlement process, based on the data of the electronic money read by the scanner 392 or the card reader 393. Since the credit settlement process, the code settlement process, the cash settlement process, and the electronic money settlement process are well-known processes, a detailed description thereof is omitted here.

The processor 31 that has finished the settlement process proceeds to ACT27. The processor 31 issues a receipt by controlling the printer 394 as ACT27. In addition, the processor 31 causes the touch panel 391 to display an image of a settlement end screen SCf (see FIG. 13) as ACT28.

FIG. 13 is a schematic diagram illustrating an example of an image displayed on the settlement end screen SCf after the end of the cash settlement process. As illustrated in the Figure, an image of an amount list TAb is arranged on the settlement end screen SCf. The total number of commodities, the total amount, a deposit amount inserted into the automatic change machine 300, and a change amount paid out from the automatic change machine 300, are displayed in the amount list TAb. The customer who confirms the settlement end screen SCf takes a receipt issued from the printer 394 and exits from the exit 6.

The processor 31 that displays the image of the settlement end screen SCf proceeds to ACT29. The processor 31 outputs, as ACT29, a signal instructing opening of the gate 70 to the gate system 25 by the function as the opening and closing unit 317. The gate system 25 that has received this signal opens the gate 70. In this way, if the settlement of the customer who entered the settlement area 3 is finished, the gate 70 is opened. As a result, the next customer can enter the settlement area 3.

Further, the processor 31 outputs, as ACT30, a signal for requesting deletion of the acquired transaction file, that is, the transaction file 240 received in ACT6, to the file system 24 by the function as the first notification unit 315. The file system 24 that has received this signal selects the transaction file 240 in which the value of the settlement flag is "1" and the value of the deletion flag is "0", and changes the value of the deletion flag of the transaction file 240 from "0" to "1". Then, the file system 24 returns a permission response signal to the settlement terminal 30.

The processor 31 that has requested the deletion of the transaction file 240 proceeds to ACT31. The processor 31 waits for the permission response signal as ACT31. Then, upon receiving the permission response signal, the processor 31 proceeds to ACT32. The processor 31 deletes the settlement end screen SCf as ACT32. By the above, the processor 31 ends the information processing in a case where the ninth button BTi of the detail screen SCd is input. The processor 31 returns to the idle state. The processor 31 restores the screen of the touch panel 391 to the image of the initial screen SCa.

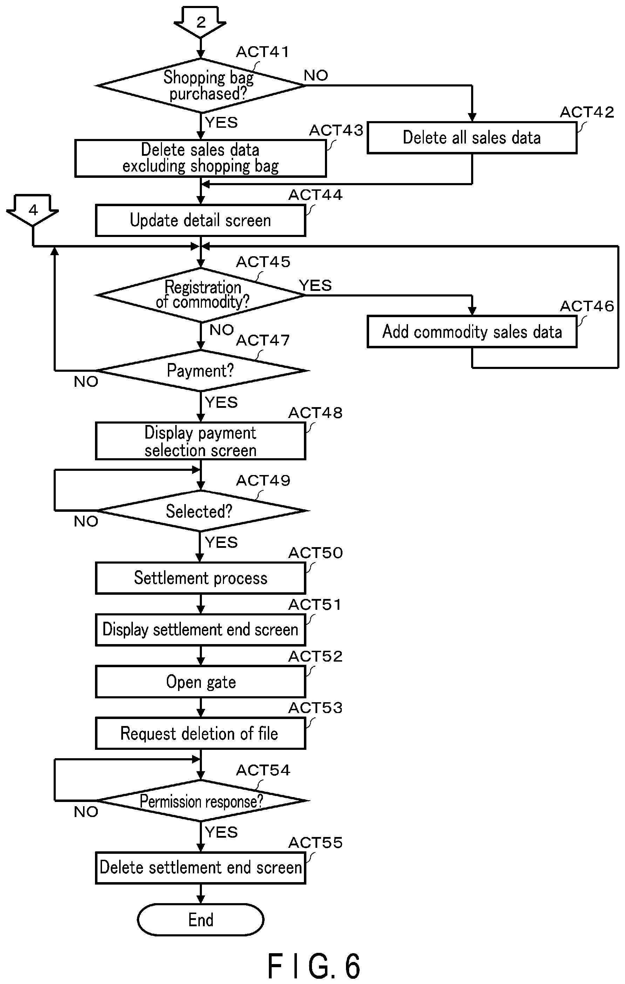

In the standby state from ACT21 to ACT23, if the tenth button BTj on which the text "Correct" is displayed is input, the processor 31 proceeds from ACT22 to ACT41 in FIG. 6. The processor 31 determines, as ACT41, whether or not the shopping bag has been purchased. If the commodity sales data of the shopping bag is added to the transaction file 240 in ACT12, the processor 31 recognizes that the shopping bag has been purchased. If the shopping bag has not been purchased, the processor 31 proceeds from ACT41 to ACT42. The processor 31 deletes, as ACT42, all the commodity sales data stored in the transaction file 240 received in ACT6. Therefore, the number of purchased commodities n becomes "0". The total amount becomes 0 yen.

On the other hand, if the shopping bag has been purchased, the processor 31 proceeds from ACT41 to ACT43. The processor 31 deletes, as ACT43, all the commodity sales data, excluding the commodity sales data of the shopping bag, from the transaction file 240 received in ACT6. Therefore, the number of purchased commodities n becomes "1". The total amount becomes the price of the purchased shopping bag.

If the process of ACT42 or ACT43 is finished, the processor 31 proceeds to ACT44. The processor 31 updates the purchased commodity list TAa of the detail screen SCd as ACT44. Specifically, if the process of ACT42 is performed, the processor 31 updates the purchased commodity list TAa so as to clear all of the commodity name of the purchased commodity, the unit price, the number of sold commodities, the discount amount, and the sales amount. If the process of ACT43 has been performed, the processor 31 updates the purchased commodity list TAa so as to clear all of the commodity names of purchased commodities excluding the shopping bag, the unit price, the number of sold commodities, the discount amount, and the sales amount.

The processor 31 that has updated the detail screen SCd proceeds to ACT45. The processor 31 waits for the commodity registration as ACT45. For example, the processor 31 waits for the bar code of the commodity to be scanned by the scanner 392. Incidentally, the customer who touches the tenth button BTj on which the text "Correct" is displayed scans the bar codes attached to the commodities obtained in the commodity sales area 2 one by one by the scanner 392.

Each time the bar code of a commodity is scanned, the processor 31 proceeds from ACT45 to ACT46. The processor 31 adds, as ACT46, the commodity sales date of the commodity, which is identified by the commodity code obtained from the scanned bar code, to the transaction file 240. By this process, the commodity name of the added commodity, the unit price, the number of sold commodities, the discount amount, and the sales amount are displayed in the purchased commodity list TAa of the detail screen SCd. In addition, the total number of commodities and the total amount of money are updated. Thereafter, the processor 31 returns to ACT45 and waits for the bar code of the next commodity to be scanned.

The customer who has scanned all the bar codes of the acquired commodities touches the ninth button BTi on which the text "Checkout" of the detail screen SCd is displayed. The processor 31 confirms, as ACT47, whether or not the ninth button BTi is input. If the ninth button BTi is input, the processor 31 proceeds from ACT47 to ACT48. The processor 31 causes the touch panel 391 to display an image of the payment selection screen SCe as ACT48. The image of the payment selection screen SCe is identical to the image described in the process of ACT24. Thereafter, the processor 31 executes, ACT48 to ACT55, the same process as the process of the above-described ACT24 to ACT32. Specifically, the processor 31 executes the settlement process of the commodity scanned by the scanner 392 by the payment method selected on the payment selection screen SCe by the function as the second settlement unit 314. The processor 31 controls the issuing of a receipt, and causes the touch panel 391 to display an image of the settlement end screen SCf. The processor 31 outputs a signal instructing opening of the gate 70 to the gate system 25. The processor 31 outputs a signal for requesting deletion of the transaction file 240 received in the ACT6 to the file system 24 by the function as the first notification unit 315. Thereafter, if the permission response signal is received, the processor 31 deletes the settlement end screen SCf. By the above, the processor 31 ends the information processing in a case where the tenth button BTj of the detail screen SCd is input. The processor 31 returns to the idle state. The processor 31 restores the screen of the touch panel 391 to the image of the initial screen SCa.

Thus, the settlement with the customer who touches the tenth button BTj on which the text "Correct" is displayed is finished. The customer exits from the exit 6. In addition, the gate 70 is opened in response to the end of the settlement. The value of the deletion flag of the transaction file 240 that is received in ACT6 and is managed by the file system 24 is changed from "0" to "1".

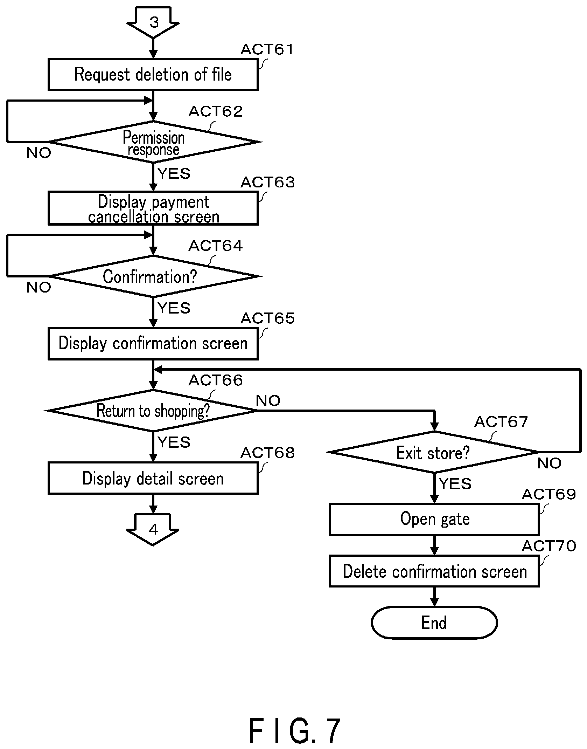

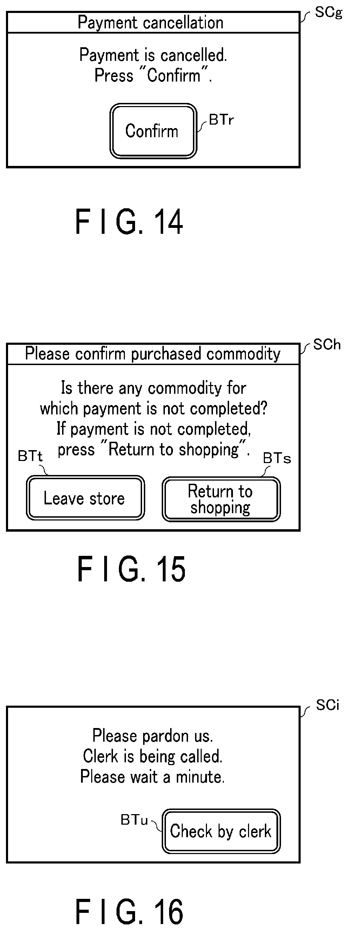

In the standby state from ACT21 to ACT23, if the eleventh button BTk on which the text "Cancel" is displayed is input, the processor 31 proceeds from ACT23 to ACT61 of FIG. 7. The processor 31 outputs, as ACT61, a signal for requesting deletion of the acquired transaction file 240, that is, the transaction file 240 received in ACT6, to the file system 24 by the function as the second notification unit 319. Then, the processor 31 waits for the permission response signal as ACT62. Further, upon receiving the permission response signal, the processor 31 proceeds to ACT63. The processor 31 causes the touch panel 391 to display an image of a payment cancellation screen SCg (see FIG. 14) as ACT63.

FIG. 14 is a schematic diagram illustrating an example of an image displayed on the payment cancellation screen SCg. As illustrated in the Figure, an image of a sixteenth button BTr on which a text "Confirm" is displayed, together with a message indicating that the payment is cancelled, is arranged on the payment cancellation screen SCg. The customer who confirms the payment cancellation screen SCg performs a touch operation on the sixteenth button BTr.

The processor 31 that has displayed the image of the payment cancellation screen SCg waits for the input of the sixteenth button BTr as ACT64. If the sixteenth button BTr is input by the touch operation, the processor 31 proceeds from ACT64 to ACT65. The processor 31 causes the touch panel 391 to display an image of a confirmation screen SCh (see FIG. 15) as ACT65.

FIG. 15 is a schematic diagram illustrating an example of an image displayed on the confirmation screen SCh. As illustrated in the Figure, images of a seventeenth button BTs on which a text "Return to shopping" is displayed and an eighteenth button BTt on which a text "Leave store" is displayed, are arranged on the confirmation screen SCh, together with a message requesting confirmation of whether or not there is a commodity for which payment is not completed. The customer who checks the confirmation screen SCh determines whether or not there is a commodity for which the payment is not completed. A customer who has a commodity for which the payment is not completed touches the seventeenth button BTs. A customer who does not have a commodity for which the payment is not completed touches the eighteenth button BTt.

The processor 31 that displays the image of the confirmation screen SCh waits for the seventeenth button BTs to be input as ACT66, or the eighteenth button BTt to be input as ACT67. In the standby state in ACT66 and ACT67, if the seventeenth button BTs is input, the processor 31 proceeds from ACT66 to ACT68. The processor 31 causes the touch panel 391 to display an image of the detail screen SCd as a ACT68. Incidentally, at this time point, since the transaction file 240 acquired from the file system 24 is deleted, the purchased commodity list TAa is cleared. Thereafter, the processor 31 proceeds to ACT45 in FIG. 6. Then, the processor 31 executes the processing from ACT45 to ACT55 in the same manner as described above. However, the process of ACT53 and ACT54 is skipped.

Specifically, a customer who has a commodity for which payment is not completed scans the bar code of the commodity for which the payment is not completed by the scanner 392. Then, the customer who has scanned all the bar codes of the commodities touches the ninth button BTi on which the text "Checkout" is displayed on the detail screen SCd. Thus, the settlement with the customer who touched the 17th button BTs, on which the text "Return to shopping" is displayed, is finished. The customer exits from the exit 6. In addition, the gate 70 is opened in response to the end of the settlement.

In the standby state in ACT66 or ACT67, if the eighteenth button BTt is input, the processor 31 proceeds from ACT67 to ACT69. The processor 31 outputs a signal instructing opening of the gate 70 to the gate system 25 as ACT69. In addition, the processor 31 deletes the confirmation screen SCh as ACT70. By the above, the processor 31 ends the information processing in a case where the eleventh button BTk of the detail screen SCd is input. The processor 31 returns to the idle state. The processor 31 restores the screen of the touch panel 391 to the image of the initial screen SCa.

Specifically, the customer who does not have the commodity for which the payment is not completed exits from the exit 6 without performing the settlement. The gate 70 is opened.

The process after ACT14 in FIG. 4 is described.

The processor 31 that failed to receive the transaction file 240 within the predetermined time in ACT6 outputs, as ACT14, a signal of a store clerk call command to the clerk terminal 40 by the function as the calling unit 316. In addition, the processor 31 causes the touch panel 391 to display an image of a calling-in-progress screen SCi (see FIG. 16).

FIG. 16 is a schematic diagram illustrating an example of an image displayed on the calling-in-progress screen SCi. As illustrated in the Figure, an image of a nineteenth button BTu on which a text "Check by clerk" is displayed, together with a message notifying the customer that the clerk is being called, is arranged on the calling-in-progress screen SCi.

In the clerk terminal 40 that has received the signal of the store clerk call command, a notification operation is executed. The store clerk who has confirmed the notification operation moves to the settlement area 3. Then, the store clerk notifies the customer that an error in which the transaction file 240 cannot be acquired has occurred, and performs a touch operation on the nineteenth button BTu.

The processor 31 that has displayed the image of the calling-in-progress screen SCi waits for the input of the nineteenth button BTu as ACT16. If the nineteenth button BTu is input, the processor 31 proceeds from ACT16 to ACT17. The processor 31 deletes the calling-in-progress screen SCi as ACT17. Thereafter, the processor 31 proceeds to ACT7. Then, the processor 31 executes the processing after ACT7 in the same manner as described above.

Accordingly, if the customer operates the membership confirmation screen SCb and then operates the shopping bag selection screen SCc, the screen of the touch panel 391 becomes the detail screen SCd. In this case, the customer touches the tenth button BTj of the text "Correct". Then, the customer scans the bar code of the obtained commodity by the scanner 392. Thus, the customer can settle the payment for the obtained commodity by himself/herself. The store clerk who has received the call may explain the above-described operation procedure to the customer.

As described above in detail, according to the settlement terminal 30 including the processor 31 having the functions as the acquisition unit 310, display control unit 311, correction acceptance unit 312, first settlement unit 313 and second settlement unit 314, even in a case where there is an error in the data of the transaction file 240 acquired from the file system 24 due to a problem of the unmanned store system, the customer can operate the settlement terminal 30 by himself/herself and can smoothly perform settlement.

In addition, since the processor 31 has the function as the first notification unit 315, not only the transaction file 240 of the customer who has completed the settlement, but also the transaction file 240 of another customer, which was transferred to the settlement terminal 30 due to a problem of the system, can be set in the deletion state.

Additionally, since the processor 31 has the function as the calling unit 316, even in a case where the transaction file 240 cannot be acquired from the file system 24, the store clerk can come and promptly cope with the situation. As a result, the customer can operate the settlement terminal 30 by himself/herself and can smoothly perform settlement.

Additionally, the processor 31 also has the function as the opening and closing unit 317. Therefore, while one customer or a group of customers is performing settlement, no other customer enters the settlement area 3.

Furthermore, since the processor 31 has the functions as the cancellation acceptance unit 318 and the second notification unit 319, the customer who entered the settlement area 3 can cancel the settlement.

The embodiment of the settlement apparatus, which enables the customer to smoothly perform settlement by the operation of the customer himself/herself even if the unmanned store system has a problem, has been described above, but the embodiment is not limited thereto.

For example, in the embodiment, the case was exemplarily illustrated in which the commodity sales area 2 includes the movement line tracking system 21, action detection system 22, commodity identification system 23, file system 24, and gate system 25. The configuration of the commodity sales area 2 is not limited to this. In short, it suffices if the settlement terminal 30 is configured to acquire information of a commodity obtained by a settler in the commodity sales area 2.

For example, in a case where the embodiment is applied to a store in which a membership system is not introduced, the processes from ACT7 to ACT9 may be omitted in FIG. 4. Besides, in a case where the embodiment is applied to a store that does not sell a pay shopping bag, the processes of ACT10 to ACT12 may be omitted in FIG. 4.

The settlement apparatus described above is as follows.
(1) A settlement apparatus including:
   an acquisition unit configured to acquire, from an external system, information of a commodity obtained by a settler in a commodity sales area;
   a display control unit configured to cause a display device to display the information of the commodity acquired by the acquisition unit;
   a correction acceptance unit configured to accept a correction instruction relating to the information of the commodity;
   a first settlement unit configured to perform settlement, based on the information of the commodity acquired by the acquisition unit, in a case where the correction instruction is not accepted; and
   a second settlement unit configured to discard the information of the commodity acquired by the acquisition unit and to perform the settlement, based on information of the commodity acquired via an input device, in a case where the correction instruction is accepted.
(2) The settlement apparatus according to (1), further including:
   a first notification unit configured to notify the external system of deletion of the information of the commodity acquired by the acquisition unit in response to an end of the settlement by the first settlement unit or the second settlement unit.
(3) The settlement apparatus according to (1) or (2), further including:
   a calling unit configured to output a signal for calling a store clerk in a case where the acquisition unit fails to acquire the information of the commodity.
(4) The settlement apparatus according to any one of (1) to (3), further including:
   an opening and closing unit configured to close an entrance from the commodity sales area to a settlement area in a case where the settler enters the settlement area in which the settlement apparatus is provided, and to open the entrance in response to an end of the settlement by the first settlement unit or the second settlement unit.
(5) The settlement apparatus according to (4), further including:
   a cancellation acceptance unit configured to accept a cancellation instruction of the settlement based on the information of the commodity acquired by the acquisition unit; and
   a second notification unit configured to notify the external system of deletion of the information of the commodity acquired by the acquisition unit, if the cancellation instruction is accepted,
   wherein the opening and closing unit opens the entrance on condition that a response indicating that the deletion of the information of the commodity is permitted is received from the external system.
(6) A program for causing a computer of a settlement apparatus including an interface with an external system, a display device, and an input device to function as:
   an acquisition unit configured to acquire, from the external system via the interface, information of a commodity obtained by a settler in a commodity sales area;
   a display control unit configured to cause the display device to display the information of the commodity acquired by the acquisition unit;
   a correction acceptance unit configured to accept a correction instruction relating to the information of the commodity;
   a first settlement unit configured to perform settlement, based on the information of the commodity acquired by the acquisition unit, in a case where the correction instruction is not accepted; and
   a second settlement unit configured to discard the information of the commodity acquired by the acquisition unit and to perform the settlement, based on information of the commodity acquired via the input device, in a case where the correction instruction is accepted.
(7) A computer-readable storage medium storing a program for causing a computer of a settlement apparatus including an interface with an external system, a display device, and an input device to function as:
   an acquisition unit configured to acquire, from the external system via the interface, information of a commodity obtained by a settler in a commodity sales area;
   a display control unit configured to cause the display device to display the information of the commodity acquired by the acquisition unit;
   a correction acceptance unit configured to accept a correction instruction relating to the information of the commodity;
   a first settlement unit configured to perform settlement, based on the information of the commodity acquired by the acquisition unit, in a case where the correction instruction is not accepted; and
   a second settlement unit configured to discard the information of the commodity acquired by the acquisition unit and to perform the settlement, based on information of the commodity acquired via the input device, in a case where the correction instruction is accepted.

The program according to the present embodiment may be transferred in a state of being stored in an electronic apparatus, or may be transferred in a state of not being stored in the electronic apparatus. In the latter case, the program may be transferred via a network or may be transferred in a state of being stored in a storage medium. The storage medium is a non-transitory tangible medium. The storage medium is a computer-readable medium. The storage medium may be any medium that can store a program and can be read by a computer, such as a CD-ROM or a memory card, and the form thereof is not limited.

The embodiments are presented as examples and are not intended to limit the scope of the invention. Indeed, the novel embodiments described herein may be embodied in a variety of other forms; furthermore, various omissions, substitutions and changes in the form of the embodiments described herein may be made without departing from the spirit of the inventions.
These embodiments and modifications thereof are included in the scope of the invention and are included in the invention described in the claims and the scope of equivalents thereof.

## Claims

1. A settlement apparatus comprising:
an acquisition unit configured to acquire, from an external system, information of a commodity obtained by a settler in a commodity sales area;
a display control unit configured to cause a display device to display the information of the commodity acquired by the acquisition unit;
a correction acceptance unit configured to accept a correction instruction relating to the information of the commodity;
a first settlement unit configured to perform settlement, based on the information of the commodity acquired by the acquisition unit, in a case where the correction instruction is not accepted; and
a second settlement unit configured to discard the information of the commodity acquired by the acquisition unit and to perform the settlement, based on information of the commodity acquired via an input device, in a case where the correction instruction is accepted.

2. The settlement apparatus according to Claim 1, further comprising:
a first notification unit configured to notify the external system of deletion of the information of the commodity acquired by the acquisition unit in response to an end of the settlement by the first settlement unit or the second settlement unit.

3. The settlement apparatus according to Claim 1, further comprising:
a calling unit configured to output a signal for calling a store clerk in a case where the acquisition unit fails to acquire the information of the commodity.

4. The settlement apparatus according to any one of Claims 1 to 3, further comprising:
an opening and closing unit configured to close an entrance from the commodity sales area to a settlement area in a case where the settler enters the settlement area in which the settlement apparatus is provided, and to open the entrance in response to an end of the settlement by the first settlement unit or the second settlement unit.

5. The settlement apparatus according to Claim 4, further comprising:
a cancellation acceptance unit configured to accept a cancellation instruction of the settlement based on the information of the commodity acquired by the acquisition unit; and
a second notification unit configured to notify the external system of deletion of the information of the commodity acquired by the acquisition unit, if the cancellation instruction is accepted,
wherein the opening and closing unit opens the entrance on condition that a response indicating that the deletion of the information of the commodity is permitted is received from the external system.

6. A program for causing a computer of a settlement apparatus including an interface with an external system, a display device, and an input device to function as:
an acquisition unit configured to acquire, from the external system via the interface, information of a commodity obtained by a settler in a commodity sales area;
a display control unit configured to cause the display device to display the information of the commodity acquired by the acquisition unit;
a correction acceptance unit configured to accept a correction instruction relating to the information of the commodity;
a first settlement unit configured to perform settlement, based on the information of the commodity acquired by the acquisition unit, in a case where the correction instruction is not accepted; and
a second settlement unit configured to discard the information of the commodity acquired by the acquisition unit and to perform the settlement, based on information of the commodity acquired via the input device, in a case where the correction instruction is accepted.

7. A computer-readable storage medium storing a program for causing a computer of a settlement apparatus including an interface with an external system, a display device, and an input device to function as:
an acquisition unit configured to acquire, from the external system via the interface, information of a commodity obtained by a settler in a commodity sales area;
a display control unit configured to cause the display device to display the information of the commodity acquired by the acquisition unit;
a correction acceptance unit configured to accept a correction instruction relating to the information of the commodity;
a first settlement unit configured to perform settlement, based on the information of the commodity acquired by the acquisition unit, in a case where the correction instruction is not accepted; and
a second settlement unit configured to discard the information of the commodity acquired by the acquisition unit and to perform the settlement, based on information of the commodity acquired via the input device, in a case where the correction instruction is accepted.
